Europäisches Patentamt

(19) European Patent Office

Office européen des brevets

(11) Veröffentlichungsnummer: **0 079 031**
**B1**

(12) # EUROPÄISCHE PATENTSCHRIFT

(45) Veröffentlichungstag der Patentschrift:
08.05.85

(51) Int. Cl.⁴: **G 21 C 3/62**, **C 04 B 35/51**

(21) Anmeldenummer: **82110100.3**

(22) Anmeldetag: **02.11.82**

(54) Verfahren zum Herstellen von oxidischen Kernbrennstoffsinterkörpern.

(30) Priorität: **10.11.81 DE 3144684**

(43) Veröffentlichungstag der Anmeldung:
**18.05.83 Patentblatt 83/20**

(45) Bekanntmachung des Hinweises auf die Patenterteilung:
**08.05.85 Patentblatt 85/19**

(84) Benannte Vertragsstaaten:
**BE FR GB IT SE**

(56) Entgegenhaltungen:
**CH - A - 454 291**
**DE - A - 1 614 533**
**DE - A - 1 911 564**
**DE - A - 2 008 298**
**DE - A - 2 021 395**
**DE - A - 2 139 522**
**DE - A - 2 559 019**
**DE - A - 2 833 054**
**DE - A - 2 939 415**
**DE - B - 1 646 458**
**DE - B - 1 938 470**
**DE - B - 1 956 132**
**DE - B - 2 030 654**
**US - A - 3 168 601**

(73) Patentinhaber: **KRAFTWERK UNION AKTIENGESELLSCHAFT, Wiesenstrasse 35, D-4330 Mülheim (Ruhr) (DE)**
Patentinhaber: **REAKTOR-BRENNELEMENT UNION GmbH, Postfach 11 00 60, D-6450 Hanau 11 (DE)**

(72) Erfinder: **Dörr, Wolfgang, Dr., Dipl.-Phys., Von-Weber-Strasse 51 a, D-8522 Herzogenaurach (DE)**
Erfinder: **Peehs, Martin, Dr., Dipl.-Phys., Fakienstrasse 3, D-8521 Bubenreuth (DE)**
Erfinder: **Sondermann, Thomas, Freigerichterstrasse 14, D-8756 Kahl (DE)**
Erfinder: **Gradel, Gerhard, Dipl.-Ing., Lilienstrasse 23, D-8581 Eckersdorf (DE)**
Erfinder: **Schäfer, Reinhard, Landwehrstrasse 11, D-6458 Rodenbach (DE)**

(74) Vertreter: **Mehl, Ernst, Dipl.-Ing. et al, Postfach 22 01 76, D-8000 München 22 (DE)**

## Beschreibung

Die Erfindung betrifft ein Verfahren zum Herstellen von oxidischen Kernbrennstoffsinterkörpern durch Kompaktieren von $UO_2$-Ausgangspulver oder einer Mischung aus $UO_2$- und $PuO_2$-Ausgangspulver, die bis zu 10 Gew.-% Seltenerdoxid, insbesondere $Gd_2O_3$, als Zusatz enthalten, zu Preßlingen und anschließendes Verdichten dieser Preßlinge durch eine Wärmebehandlung in einer reduzierend wirkenden Sinteratmosphäre.

Ein solches Verfahren ist aus der DE-A-2 939 415 bekannt. Die Wärmebehandlung der Preßlinge erfolgt bei diesem bekannten Verfahren zunächst in einer oxidierend wirkenden Sinteratmosphäre bei 800° C bis 1400° C für eine Zeit von 15 Min. bis 2 Std. und dann erst in der reduzierend wirkenden Sinteratmosphäre bei einer Temperatur über 1650° C für eine Zeit von 30 Min. bis 4 Std.

Während der Wärmebehandlung in der oxidierenden Atmosphäre gehen die Preßlinge bei der verhältnismäßig niedrigen Behandlungstemperatur in einen überstöchiometrischen Zustand über, in dem die Ausbildung von sinterhemmenden $(U, Gd)O_{2 \pm y}$-Phasen nicht aktiviert wird, welche die Ausbildung hoher Sinterdichten in den Preßlingen erst nach sehr langen Sinterzeiten zulassen würden.

Mit den bekannten Verfahren werden oxidische Kernbrennstoffsinterkörper gewonnen, die ein Seltenerdelement, z. B. Gadolinium, als neutronenphysikalisch abbrennbares Neutrongift enthalten und deren Sinterdichte über 90% ihrer theoretisch möglichen Dichte beträgt und die deshalb in einem in Betrieb befindlichen Kernreaktor verhältnismäßig wenig gasförmige oder leicht flüchtige Kernspaltprodukte freisetzen. Brennstäbe, die nach dem bekannten Verfahren gewonnene Kernbrennstoffsinterkörper enthalten, entwickeln also allenfalls einen geringen Überdruck in den Brennstabhüllrohren. Auch tritt während des Betriebes im Kernreaktor kein Schrumpfen und kein örtliches Überhitzen dieser Kernbrennstoffsinterkörper auf, die zu Brennstabdefekten führen würden.

Der Erfindung liegt die Aufgabe zugrunde, das bekannte Verfahren noch weiter zu vereinfachen, ohne daß Einbußen an Sinterdichte der gewonnenen Kernbrennstoffsinterkörper hingenommen werden müssen.

Zur Lösung dieser Aufgabe ist ein Verfahren der eingangs erwähnten Art erfindungsgemäß dadurch gekennzeichnet, daß $UO_2$-Ausgangspulver zum Kompaktieren verwendet wird, welches eine spezifische Oberfläche im Bereich von 2 bis 4,5 $m^2/g$ und/oder einen mittleren Kristallitdurchmesser im Bereich von 80 nm bis 250 nm hat, und daß die Wärmebehandlung in der reduzierend wirkenden Sinteratmosphäre bei einer Temperatur im Bereich von 1500° C bis 1750° C durchgeführt wird.

Es wurde gefunden, daß $UO_2$-Ausgangspulver mit einer solchen verhältnismäßig kleinen spezifischen Oberfläche und/oder einem solchen verhältnismäßig großen mittleren Kristallitdurchmesser, das nicht besonders feinporös ist und deshalb an sich schlecht verdichtet werden kann, eine sehr große Verdichtungsbereitschaft bei verhältnismäßig hohen Wärmebehandlungstemperaturen zeigt, wenn es Seltenerdoxid, wie z. B. $Gd_2O_3$ beigemengt enthält. Eine Wärmebehandlung in oxidierend wirkender Sinteratmosphäre vor oder auch nach der Wärmebehandlung in der reduzierend wirkenden Sinteratmosphäre kann ohne Beeinträchtigung der Sinterdichte der aus dem $UO_2$-Ausgangspulver gewonnenen Kernbrennstoffsinterkörper entfallen.

Es ist zwar üblich, $UO_2$-Ausgangspulver zu oxidischen Seltenerdelemente enthaltenden Kernbrennstoffsinterkörpern zu verarbeiten, dieses $UO_2$-Ausgangspulver konnte jedoch nicht unmittelbar kompaktiert und einer Wärmebehandlung zu Sinterzwecken unterworfen werden, sondern das $UO_2$-Ausgangspulver mußte zunächst zum Erzielen einer hohen Sinterdichte der Kernbrennstoffsinterkörper unter Bildung einer mittleren Oberfläche größer als 4,5 $m^2/g$ und eines mittleren Kristallitdurchmessers größer als 250 nm aufgemahlen, sodann mit pulverförmigem Seltenerdoxid vermengt, vorkompaktiert und anschließend zu riesel- und verpreßfähigen Granulaten granuliert werden. Erst diese Granulate wurden zu Preßlingen kompaktiert, die schließlich einer Wärmebehandlung zu Sinterzwecken unter Ausbildung der Kernbrennstoffsinterkörper unterworfen wurden. Ein solches Vorgranulieren des $UO_2$-Ausgangspulvers kann demgegenüber beim erfindungsgemäßen Verfahren ebenfalls entfallen.

Als $UO_2$-Ausgangspulver kann für das erfindungsgemäße Verfahren unmittelbar nach dem sogenannten ADU-Verfahren entsprechend »Gmelin Handbuch der anorganischen Chemie, Uran, Ergänzungsband A3, pp 99—101, 1981« gewonnenes, ungranuliertes Urandioxidpulver verwendet werden. Es kann aber auch nach dem sogenannten AUC-Verfahren entsprechend »Gmel Handbuch der anorganischen Chemie, Uran, Ergänzungsband A3, pp 104, 1981« gewonnenes ungranuliertes Urandioxdpulver verwendet werden, sofern die Verweilzeiten des Pulvers unter Pyrohydrolysebindungen entsprechend gewählt wurden.

Es ist wirtschaftlich, wenn beim erfindungsgemäßen Verfahren die Temperatur der Preßlinge während der Wärmebehandlung für einen Haltezeitraum im Bereich von 1 Std. bis 10 Std. gehalten wird. In diesem zeitlichen Bereich wird eine optimale Dichte der Kernbrennstoffsinterkörper erzielt, eine länger dauernde Wärmebehandlung verbessert diese Dichte nicht mehr, sondern kann unter Umständen sogar zu einem Anschwellen der Kernbrennstoffsinterkörper führen.

Ferner ist es günstig, wenn die Preßlinge mit einer Aufheizgeschwindigkeit im Bereich von 1° C/Min. bis 10° C/Min. auf die Temperatur der Wärmebehandlung aufgeheizt werden. Hierdurch ist gewährleistet, daß genügend Zeit für die schon in der Aufheizphase in den Preßlingen beginnenden Verdichtungsvorgänge vorhanden ist.

Die Erfindung und ihre Vorteile seien an einem Vergleichsbeispiel und zwei Ausführungsbeispielen näher erläutert:

Als Vergleichsbeispiel wurde nach dem AUC-Verfahren entsprechend nach dem Gmelin Handbuch gewonnenes ungranuliertes UO$_2$-Ausgangspulver mit einer spezifischen Oberfläche von 6,6 m$^2$/g und einem mittleren Kristallitdurchmesser von 30 nm mit 6,5 Gew.-% Gd$_2$O$_3$-Pulver vermengt und zu Preßlingen mit einer Preßlingsdichte von 5,6 g/cm$^3$ kompaktiert. In einem Sinterofen wurden diese Preßlinge sodann ausschließlich in einer reduzierend wirkenden reinen Wasserstoffatmosphäre mit einer Aufheizgeschwindigkeit von 10° C/Min. auf 1750° C erhitzt und auf dieser Temperatur 2 Std. lang gehalten. Nach dem Abkühlen hatten die aus den so behandelten Preßlingen gewonnenen Kernbrennstoffsinterkörper eine Dichte von 9,81 g/cm$^3$, was 91,7% ihrer theoretisch möglichen Dichte entspricht.

Als erstes Ausführungsbeispiel wurde ebenfalls nach dem AUC-Verfahren entsprechend dem Gmelin Handbuch hergestelltes ungranuliertes UO$_2$-Ausgangspulver verwendet, welches jedoch durch eine verlängerte Verweilzeit bei Pyrohydrolysebedingungen auf eine spezifische Oberfläche von 5,3 m$^2$/g und einen mittleren Kristallitdurchmesser von 110 nm gebracht worden war. Dieses ungranulierte UO$_2$-Ausgangspulver wurde nach dem Vermengen mit 6,5 Gew.-% Gd$_2$O$_3$-Pulver ebenfalls zu Preßlingen mit einer Dichte von 5,6 g/cm$^3$ kompaktiert, die unter den gleichen Bedingungen aufgeheizt und gesintert wurden wie beim Vergleichsbeispiel. Aus den Preßlingen wurden auf diese Weise Kernbrennstoffsinterkörper mit einer Dichte von 10 g/cm$^3$, das ist 93,4% der theoretisch möglichen Dichte, gewonnen.

In einem zweiten Ausführungsbeispiel wurde wiederum durch das AUC-Verfahren entsprechend dem Gmelin Handbuch gewonnenes UO$_2$-Ausgangspulver ungranuliert verwendet, dessen Verweilzeit bei Pyrohydrolysebedingungen jedoch so groß war, daß sich eine spezifische Oberfläche von 4,4 m$^2$/g und ein mittlerer Kristallitdurchmesser von 140 nm ergeben hat. Auch dieses UO$_2$-Ausgangspulver wurde mit 6,5 Gew.-% Gd$_2$O$_3$-Pulver vermengt und zu Preßlingen mit einer Dichte von 5,6 g/cm$^3$ kompaktiert, die anschließend den gleichen Sinterbedingungen unterworfen wurden, wie beim Vergleichsbeispiel und dem ersten Ausführungsbeispiel. Die so gewonnenen Kernbrennstoffsinterkörper hatten eine Dichte von 10,17 g/cm$^3$, was 95,1% ihrer theoretisch möglichen Dichte entspricht.

**Patentansprüche**

1. Verfahren zum Herstellen von oxidischen Kernbrennstoffsinterkörpern durch Kompaktieren von UO$_2$-Ausgangspulver oder einer Mischung aus UO$_2$- und PuO$_2$-Ausgangspulver, die bis zu 10 Gew.-% Seltenerdoxid, insbesondere Gd$_2$O$_3$, als Zusatz enthalten, zu Preßlingen und anschließendes Verdichten dieser Preßlinge durch eine Wärmebehandlung in einer reduzierend wirkenden Sinteratmosphäre, dadurch gekennzeichnet, daß UO$_2$-Ausgangspulver zum Kompaktieren verwendet wird, welches eine spezifische Oberfläche im Bereich von 2 bis 4,5 m$^2$/g und/oder einen mittleren Kristallitdurchmesser im Bereich von 80 nm bis 250 nm hat, und daß die Wärmebehandlung in der reduzierend wirkenden Sinteratmosphäre bei einer Temperatur im Bereich von 1500° C bis 1750° C durchgeführt wird.

2. Verfahren nach Anspruch 1, dadurch gekennzeichnet, daß die Temperatur der Preßlinge während der Wärmebehandlung für einen Haltezeitraum im Bereich von 1 Std. bis 10 Std. gehalten wird.

3. Verfahren nach Anspruch 1, dadurch gekennzeichnet, daß die Preßlinge mit einer Aufheizgeschwindigkeit im Bereich von 1° C/Min. bis 10° C/Min. auf die Temperatur der Wärmebehandlung aufgeheizt werden.

**Claims**

1. Method for the production of oxidic nuclear fuel sintered bodies by compacting UO$_2$-starting powder, or a mixture of UO$_2$- and PuO$_2$-starting powder, which contains up to 10% by weight of rare earth oxide, in particular Gd$_2$O$_3$, as an addition, to form pressings and by subsequently consolidating these pressings by a heat treatment in a sintering atmosphere which has a reducing effect, characterised in that UO$_2$-starting powder is used for the compacting step, which has a specific surface area in the range of 2 to 4.5 m$^2$/g, and/or a central crystallite diameter in the range of 80 mm to 250 mm; and that the heat treatment in the reducing sintering atmosphere is carried out at a temperature in the range of 1500° C to 1750° C.

2. A method as claimed in Claim 1, characterised in that, during the heat treatment, the temperature of the pressings is kept for a holding period in the range of 1 to 10 hours.

3. A method as claimed in Claim 1, characterised in that the pressings are heated to the temperature of the heat treatment at a rate of heating in the range of 1 to 10° CMin.

**Revendications**

1. Procédé de fabrication de corps frittés en matières combustibles nucléaires oxydés par compactage de poudre de départ en UO$_2$ ou

d'un mélange de poudres de départ de $UO_2$ et de $PuO_2$ qui contiennent comme additif jusqu'à 10% en poids d'oxyde de terres rares, notamment de $Gd_2O_3$ en comprimés et ensuite par densification de ces comprimés, par traitement thermique dans une atmosphère de frittage à action réductrice, caractérisé en ce qu'il consiste à utiliser pour le compactage de la poudre de départ en $UO_2$ qui a une surface spécifique comprise dans la plage de 2 à 4,5 $m^2/g$ et/ou un diamètre moyen de cristallite compris dans la plage de 80 nm à 250 nm, et en ce qu'il consiste à effectuer le traitement thermique dans l'atmosphère de frittage à action réductrice à une température comprise dans la plage de 1500°C à 1750°C.

2. Procédé suivant la revendication 1, caractérisé en ce qu'il consiste à maintenir la température des comprimés pendant le traitement thermique pendant une durée de séjour comprise dans la plage de 1 à 10 h.

3. Procédé suivant la revendication 1, caractérisé en ce qu'il consiste à porter les comprimés à la température du traitement thermique à une vitesse de chauffage comprise dans la plage de 1°C/mn à 10°C/mn.